# EUROPEAN PATENT SPECIFICATION

(11) **EP 0 514 543 B1**
(45) Date of publication and mention of the grant of the patent: **27.12.1995**
(21) Application number: 91902800.1
(22) Date of filing: 29.01.1991
(51) Int. Cl.: B01D 21/02

(54) **SEWAGE PURIFICATION APPARATUS**
VORRICHTUNG ZUR REINIGUNG VON ABWASSER
APPAREIL D'EPURATION DES EAUX D'EGOUT

(30) Priority: 29.01.1990 JP 18140/90
(43) Date of publication of application: 25.11.1992
(73) Proprietor: SAKURADA, Yasuyuki, Yokohama-shi, Kanagawa 230 (JP)
(72) Inventor: SAKURADA, Yasuyuki, Yokohama-shi, Kanagawa 230 (JP)
(74) Representative: Spall, Christopher John
(86) International application number: PCT/JP91/00103
(87) International publication number: WO 91/11243

(56) References cited:
- EP-A- 0 179 674
- EP-A- 0 389 405
- WO-A-89/00150
- JP-A-48 072 958
- JP-A-49 028 165
- JP-A-63 072 309
- JP-U-55 043 571
- JP-U-55 137 903
- JP-Y-57 029 852
- JP-Y-64 003 453
- US-A- 4 134 833

## Description

### Technical Field

This invention relates to an apparatus that highly purifies contaminated rivers, lakes, swamps, bay seawater, domestic sewage, industrial waste fluid, butcher waste fluid, sewage, dust waste fluid, garbage incinerator waste fluid, dung, agricultural chemicals, germicides, kitchen sewage and the like.

### Background Technology

Conventional sewage purification apparatuses use a concrete reservoir in a spacious land or building, wherein an apparatus to culture aerobic bacteria is equipped in the reservoir water to which bacteria are continuously supplemented. Simultaneously, air is sent by a pump in the water for activation. Contaminated water diluted by several-fold water is contacted by bacteria so that contaminants included in the water is digested by bacteria and purified. However, it takes several months and needs large equipment and high costs. It also needs an enormous land and apparatus for complete purification. Because of this, contaminated water has undesirably been drained in rivers after diluted by several-fold water, resulting in polluted rivers, lakes, swamps and seas. A filtering apparatus using sands, activated carbon, membranes or the like, is much expensive and very uneconomical.

In the past, various kinds of single flocculants have been used to purify water by cohering and removing sludge and inorganic matters from contaminated water. Aluminum sulfate, ferric chloride, polymer flocculants and the like have been used alone as the flocculant. When contaminated water was mixed and stirred with a single flocculant and left to settle, only small stones and sands cohere and settle on the bottom of the container after 6 to 24 hours, whereas the water would not become transparent. In civil constructions, the process was repeated until the contaminated water became transparent. However, it was impossible to remove impurities dissolved in the water even spending 30% of the construction costs.

Contaminated water generated in construction sites was sent by a pump into a large tank installed on the highest mountain or hill nearby, wherein the water was stirred with a single flocculant and left for 6 to 24 hours to separate inorganic matters by cohesion-sedimentation. Then supernatant, though still translucent, was transferred to another purification tank installed at a lower level, wherein a flock was stirred again and left for 6 to 24 hours, thereafter the supernatant was transferred to another tank installed on the hill at a lower level. This process was repeated several times.

Said process was repeated more than 6 to 10 times, and transparent water was finally drained into the river. Even now, ferric chloride, alum or the like is used in construction sites. (However, BOD and COD of the contaminated water or purified water are not taken into account.) Therefore, even if the water became transparent, it was still contaminated.

It is understood in the academic society and industries that contaminants included in contaminated water are unable to be purified by separation and removal using any kinds of flocculants. Therefore, in water treatment plants and sewage purification plants, solid materials and inorganic matters in the sewage are first removed by slow sedimentation, filtering, or by a slow sedimentation-separation using single flocculant (ferric chloride) mixed and stirred. Then after a slow sedimentation-separation, it is contacted with bacteria for 1 to 5 days by means of the activated-sludge process, whereby invisibly small bacteria are cultivated by giving air to digest it. This process calls for an enormous land, equipment, costs and time. Nevertheless, perfect purification is impossible. Therefore, contaminated water has been drained into rivers after adjusting its pH and filtered.

In dung processing, dung was contacted with bacteria for 5 to 7 days by the activated sludge process, then filtered through high polymer membranes, which cost 20 million Yen per cubic meter. This way, however, COD could be lowered to only 90 to 95 mg/liter. Thereafter, it was mixed with ferric chloride to settle contaminants included in it, then let it through a layer of activated carbon to make transparent water with COD of 30 mg/liter before drained into the river. This was the limit but was expensive; the cost of the purification equipment was 20 million yen per ton, while the processing costs were 2,500 to 6,000 yen per ton.

We are aware of WO-A-89/00150 which forms the pre-characterising portion of claim 1, and of EP-A-0 179 674 and US-A-4 134 833.

WO-A-89/00150 discloses an apparatus for chemical purification of waste water comprising a mixing part in which incoming water is continuously mixed with a flocculant, and a flocculating part communicating with the mixing part.

EP-A-0 179 674 describes the treatment of sewage with flocculants which are added in portions.

US-A-4 134 833 is of interest in disclosing a water recycle unit for producing clear water output from grey water input, comprising an enclosed container having a side wall provided with an outlet opening or openings through which clear water flows.

The purpose of this invention is to provide an apparatus which can recycle water at a low cost by efficiently purifying various types of contaminated water to highly pure water.

According to our invention, in a purification apparatus according to the pre-characterising portion of claim 1 said hopper comprises partitioned compartments and said mixer further comprises a flow meter mounted on an exit of said body and an injector for mixing gas and liquid so as to inject said mixed matter, attached to said mixer at a position adjacent the downstream portion thereof, and in that said injector is disposed at a lower portion of said purification tank.

A window mechanism may be provided at a predetermined position on an outer side wall of said purification tank for allowing said supernatant in said purified liquid to sequentially overflow out of said purification tank and a trough may be provided at the lower periphery of said purification tank for receiving said supernatant overflown from said purification tank, said purified liquid piping system being arranged and disposed to take out said supernant from said trough.

The apparatus of this invention are classified into two types; the continuous and intermittent types.

In order to encourage mixing in the purification tank, a supersonic vibrator, a mixing screw and an injector can be installed on the bottom part of the purification tank.

Said window mechanism has a rectangular window on the side wall of the purification tank on which a door to be moved up and down is equipped. The number of the window mechanisms can be one or more.

Exhaust gas can also be purified by feeding it into said injector.

The purification apparatus may have a single purification tank, or more than one tank connected horizontally or vertically in series if necessary.

Depending on the source of the contaminated water, it may be of high temperature (e.g. turbine cooling water in thermal power plants, drain water from air-conditioning, etc.). The temperature of such contaminated water is high after it has been purified. Therefore, such high temperature purified water can be fed into a heat exchanger to utilize exhaust heat.

By using the apparatus of this invention, a contaminated water purification method such as the one described below can be employed.

This contaminated water purification method uses two kinds of flocculants mixed into contaminated water in the first process to float or settle inorganic/organic matters. In the second process, at least three kinds of flocculants are mixed in the overflown water produced in the first process to float and settle the remained inorganic/organic matters.

At least either one of the first or second process described above is repeated more than once. Thus, semipure, pure and super-pure water can be obtained.

The flocculant used in the first process is composed of a chemical including calcium (e.g. lime, bleaching power, etc.) and one or more kinds of chemicals such as aluminum polychloride, ferric chloride, aluminum sulfate, alum, sodium silicate, hydrochloride acid, sodium hydroxide, detergent, polymer flocculants.

The primary composition of the flocculant used in the second process is a calcium-including chemical to which alum is added and one or more flocculants mentioned above.

### Brief Description of the Drawings

Fig. 1 is an outline of an embodiment of the continuous type contaminated water purification apparatus of this invention.

Fig. 2 is another embodiment of the continuous type contaminated water purification apparatus.

Fig. 3 is an outline of an embodiment of the intermittent contaminated water purification apparatus of this invention.

Fig. 4 is another embodiment of the intermittent type contaminated water purification apparatus.

Fig. 5 is a vertical cross section of the mixer used in the apparatus of this invention.

Fig. 6 is an outline component of the injector installed on the edge of the mixer described in Fig. 5.

Fig. 7 is an outline of an alternative embodiment of the injector described in Fig. 6.

Fig. 8 is a vertical cross section of an injector used in the apparatus of this invention.

Fig. 9 is a vertical cross section of another injector. Fig. 10 is an enlarged drawing of a part of Fig. 9.

Fig. 11 is the horizontal cross section of Fig. 10 viewed from line XI-XI.

Fig. 12 is the side view of an embodiment of the injector shown in Fig. 9.

Fig. 13 is the top view of Fig. 12 (B).

Fig. 14 is an embodiment of the window mechanism used in the apparatus of this invention.

Fig. 15 is an outline showing the composition of another embodiment of the apparatus of this invention.

Fig. 16 is an embodiment of the apparatus of this invention.

Fig. 17 is an application example of the apparatus of this invention.

Fig. 18 is the vertical cross section of the injector described in Fig. 6, with some alterations.

Fig. 19 shows various embodiments of the gas jet nozzle used in the injector.

### The Most Preferred Embodiment of This Invention

A sewage purification device according to the invention will be explained hereafter with reference to the drawings.

The apparatuses of this invention are generally classified into two types; continuous and intermittent.

The continuous purification apparatus feeds contaminated water continuously into a purification tank 1 and purifies it continuously. This continuous type purification apparatus comprises a mixer 2 to mix contaminated water and purify chemicals, a purification tank 1 to receive mixed matter from the mixer 2 to separate inorganic and organic floating matter, sediments and purified liquid, a purified liquid piping system 3 and a drain piping system 4 to take out floating matters and sediments.

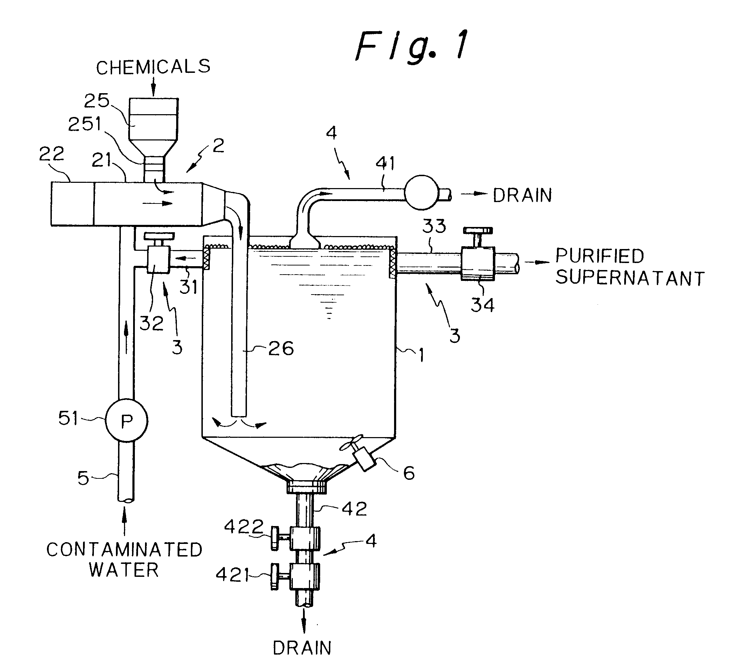

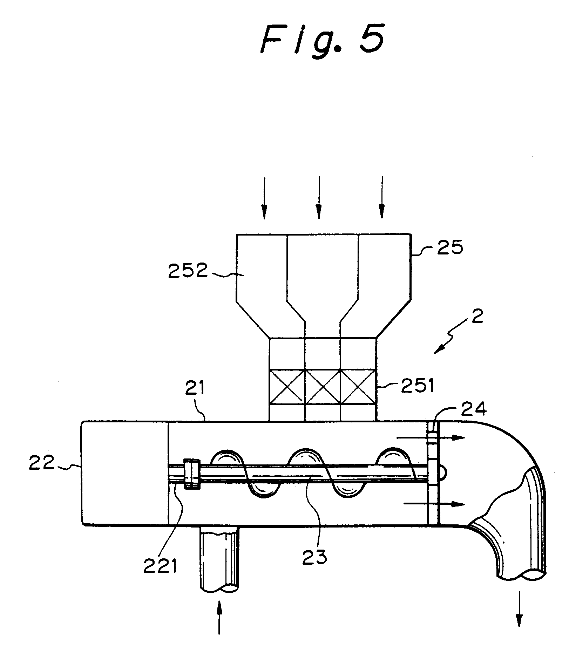

As shown in Figs. 1 and 5, the motor 22 of the mixer 2 is fixed on the edge of the body 21, and the screw shaft 23 is mounted on the motor drive shaft 221. The edge of the screw shaft 23 is supported by the body 21 so that it rotates freely. A flow meter 24 is mounted near the edge of the screw shaft.

At the center of the body 21, a hopper with many partitions is mounted, and partitioned compartments 252 are connected to the inside of the body 21 through each valves 251. To each of the partitioned compartment 252, necessary purifying chemicals are supplied.

A contaminated water induction pipe 5 is connected to the bottom of the body 21 via a pump 51. The connecting pipe 31 of the purified liquid pipe system 3 is connected to the contaminated water induction pipe 5 via the valve 32. The overflow pipe 33 of the purified liquid pipe system 3 is mounted on the upper part of the purification tank 1 via a valve 34.

The drain pipe system 4 is composed of the upper pipe 41 to suck and removes floating matters, and the lower pipe 42 to remove sediments. The lower pipe 42 is equipped with valves 421 and 422.

At the exit of the mixer 2, a conducting pipe 26 extends to the lower part of the purification tank 1 to conduct mixture of contaminated water and chemicals to inside the tank 1. As the motor 22 starts, the screw shaft 23 rotates and mixes contaminated water with chemicals and sends the mixture to the conducting pipe 26.

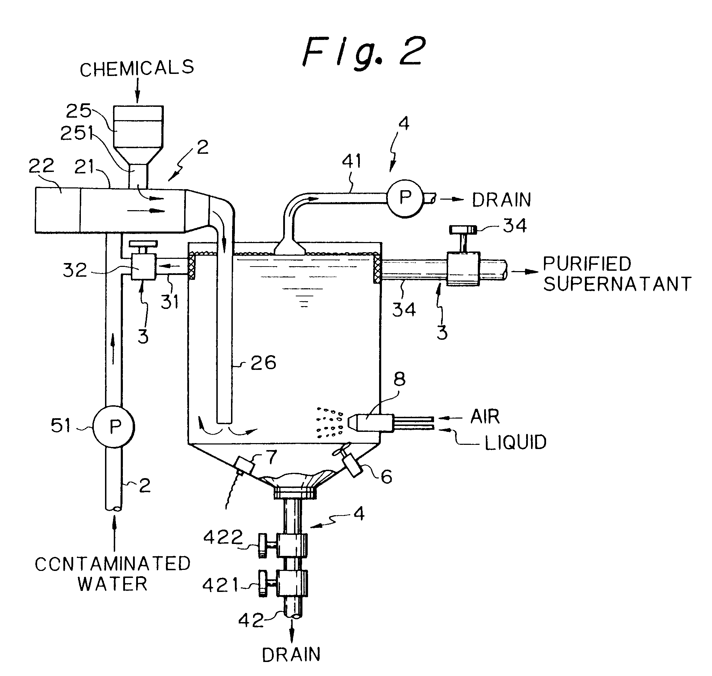

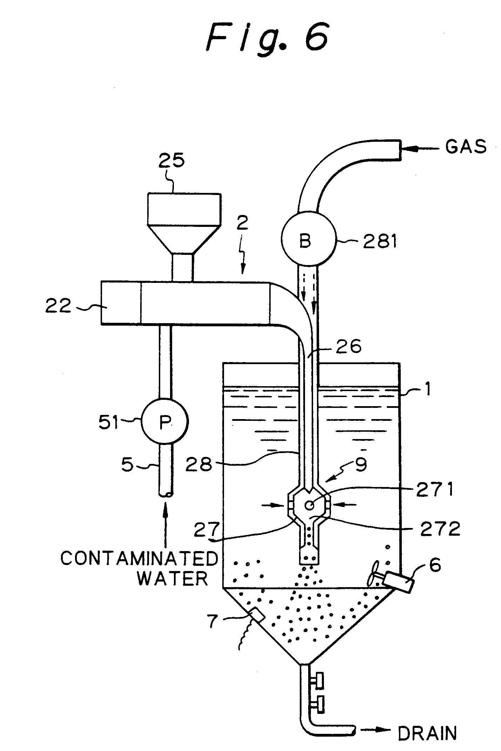

In order to promote the mixing within the purification tank 1, a supersonic vibrator 7 as shown in Fig. 2 and an injector 8 are mounted on the bottom of the purification tank in addition to the mixing screw 6, and an injector 9 (as shown in Fig. 6) is installed at the edge of the mixer 2. Injectors 8 and 9 has the function of injecting gas and liquid at a high pressure and speed, which will be explained later in detail.

The purification tank 1 may have a large diameter.

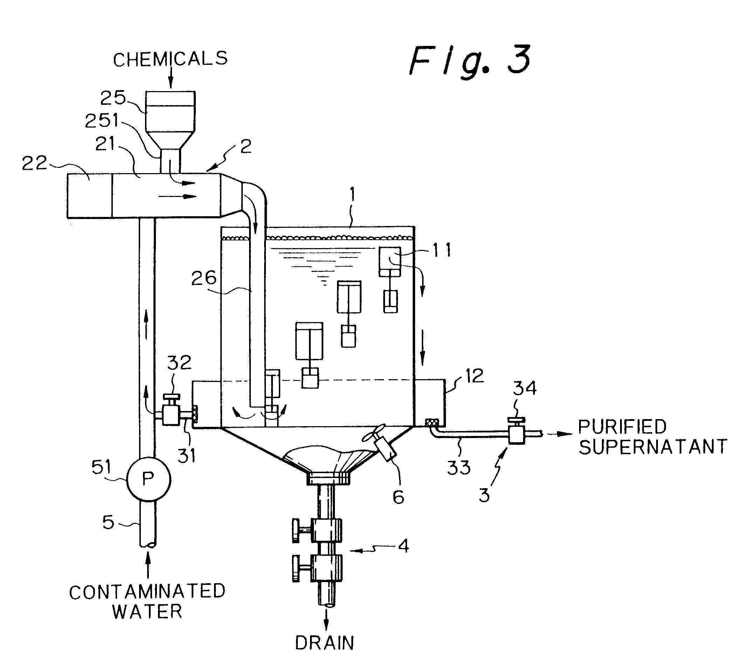

As shown in Fig. 3, in an intermittent type purification apparatus, contaminated water is fed intermittently into the purification tank 1 and purified to some degree, then the purified water is intermittently exchanged with contaminated water. This intermittent type purification apparatus is composed of a mixer 2 to mix contaminated water and purifying chemicals, a purification tank 1 to receive mixed liquid from the mixer and separate organic and inorganic matters into floating matters, sediments and purified liquid, window mechanisms 11 installed on certain places of the side wall of the purification tank to let the supernatant liquid of the purified liquid overflow to the purification tank, a tub 12 installed on the lower periphery of said purification tank 1 to receive the overflowed supernatant liquid, a purified liquid piping system 3 to take out the supernatant liquid from the tub 12, and a drain piping system 4 to take out floating and deposits.

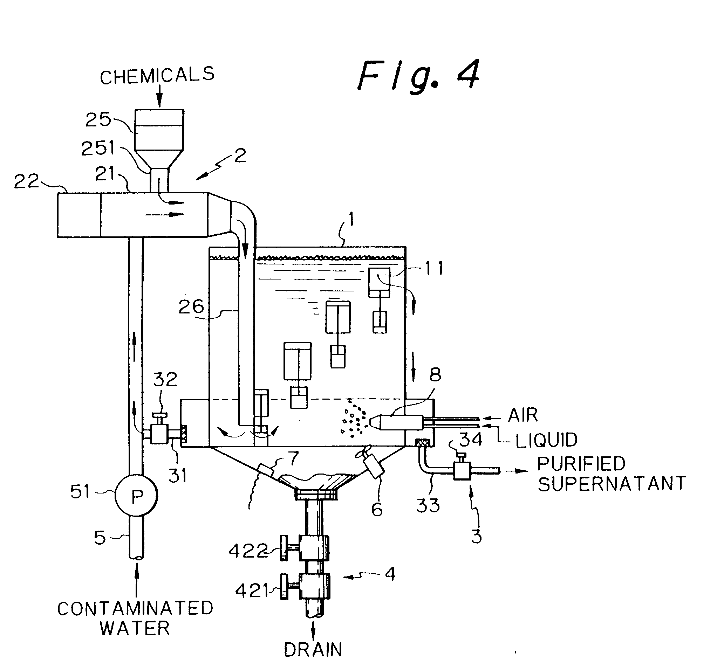

As shown in Fig. 4, in order to promote the stirring of the mixture in the purification tank 1, a supersonic vibrator 7, an injector 8 or an injector 9 (Fig. 6) at the tip of the mixer 2 can be installed on the bottom of the purification tank in addition to the mixing screw 6. An injector may be also installed on the tip of the mixer. The injectors 8 and 9 have the function to inject liquid at a high pressure and temperature, detail of which will be described later.

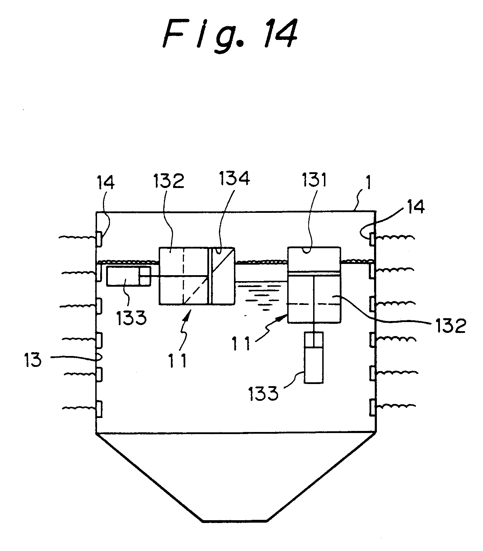

As shown in Fig. 14, the window mechanism 11 has rectangular windows 131 on the side wall 13 of the purification tank 1. A rectangular door 132 is provided on the window 131 to be moved up and down by a cylinder 133. Or, a triangular window 134 is provided on the side wall 13 of the purification tank 1, and has a door 132 to be moved horizontally by a cylinder 133. In the latter case, the door 132 and the window 134 may be triangular and rectangular respectively.

The door 132 may be opened or closed by activating the cylinder 133 based on the signal of the detector 14 which detects the degree of the purification of the mixture in the tank (e.g. the degree of transparency). The detector 14 can be of a conventional optical, electrical, magnetic or mechanical types.

The number of window mechanism 11 can be either one or more.

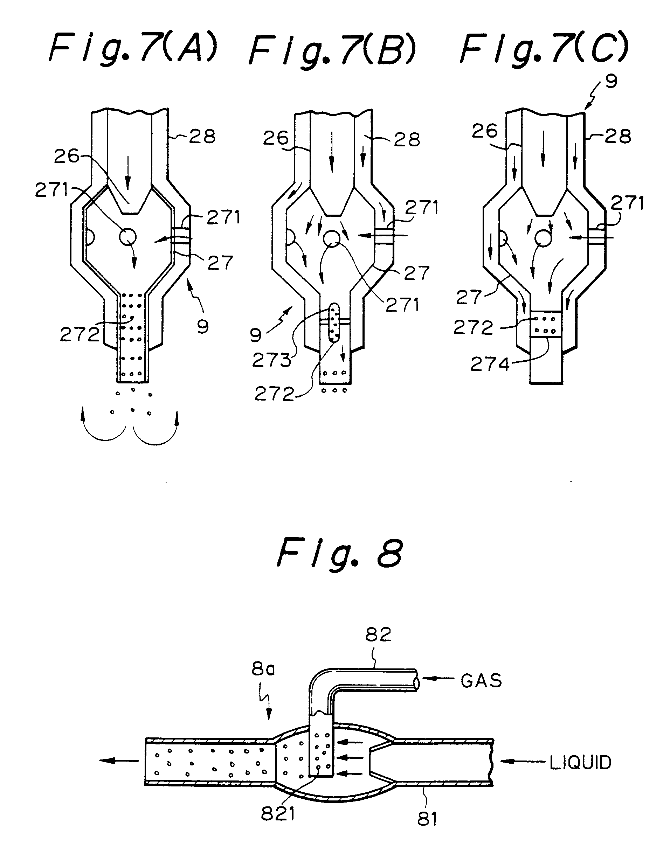

Next, the composition and operation of the injector 9 mounted on the tip of the mixer 2 are explained by referring to Figs. 6 and 7

A mixing nozzle 27 is mounted at the tip of the induction pipe 26 installed on the outlet of the mixer 2. A covering pipe 28 is provided on the periphery of the induction pipe 26 with some gap between them. The mixing nozzle 27 has some holes 271 going through to the purification tank 1. The liquid to be purified can flow out from the holes 271.

Near the edge of the nozzle 27, there are a number of small holes 272. The edge has an open end. The lower edge of the covering pipe 28 is connected to the nozzle 27 and closed at the end. The upper edge of the covering pipe 28 is equipped with a blower 281 to suck outer gas (air) or exhaust gas, etc.

The sucked gas goes through the covering pipe 28 and enters into the nozzle from the small holes 271 of the nozzle 27, wherein it mixes with the liquid to be purified sucked from the holes 271. The gas becomes a gas-liquid mixture consisting of fine bubbles and fine particles and is injected in the purification tank 1.

As shown in Fig. 7, the small holes 272 on the nozzle tip may be located on the periphery of the nozzle 27 (Fig. 7A). Or, a streamlined, long, multiple-hole injector 273 may be provided inside the edge of the nozzle 27 (Fig. 7B), or otherwise, a wing-shaped cross injector 274 may be provided within the edge of the nozzle 27 (Fig. 7C).

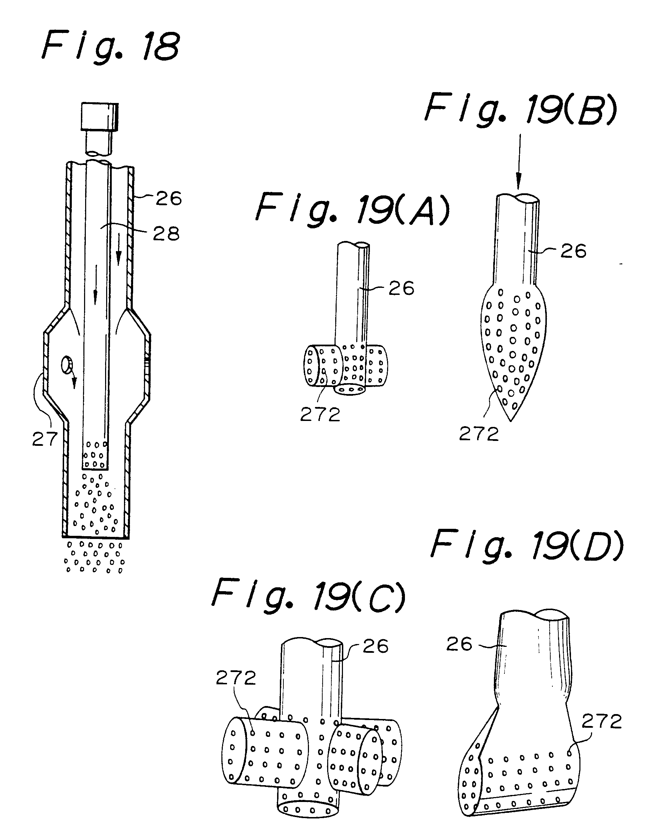

In the composition of said injector 9, the induction pipe 26 may be arranged inside the covering pipe 28 as shown in Fig. 18. Other variations of the nozzle 27 are shown in Fig. 19.

The pressure and speed of the gas-liquid mixture can be controlled by changing the number of revolution of the blower 281.

The injector 8 installed on the lower part of the purification tank 1 is explained by referring to Figs. 8 through 13.

The injector 8a shown in Fig. 8 comprises a liquid transport pipe 31 into which a gas transport pipe 82 is inserted. The edge of the gas transport pipe 82 is closed and there are a number of small holes 821 near its tip.

At this point, the liquid comprises contaminated water, purified liquid, chemicals and the like; whereas the gas comprises air, exhaust gas and the like.

The gas and liquid are mixed within the injector 8a, and the above mentioned gas-liquid mixture is injected.

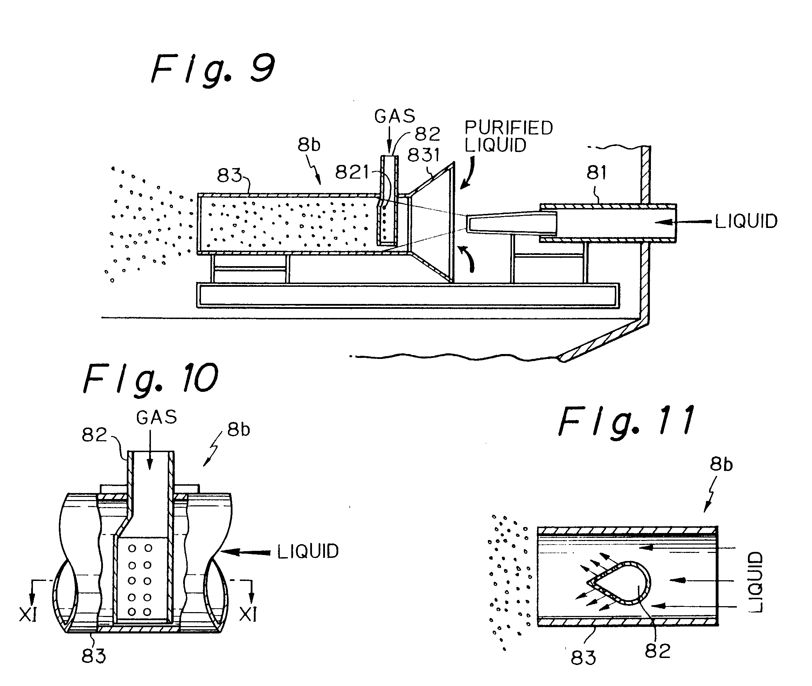

The injector 8b shown in Figs. 9, 10 and 11 is arranged apart from and facing the entrance 831 of the mixing pipe 83. The tip of the gas transport pipe 82 is inserted at the downstream of the entrance 831 of the mixing pipe 83. Liquid from the pipe 81 as well as surrounding liquid to be purified liquid are sucked into the entrance 831.

In this injector 3b, when the liquid to be purified in the purification tank 1 of about twice the volume of liquid injected from the liquid transport pipe 82 is sucked into the mixing pipe 83 and blown by high pressure, liquid is sucked from the small holes 821 of the pipe 82, which changes to myriad of ultra-fine bubbles and is injected into the purification tank 1 from injector 8b. At this time, the bubble stream rotates the water to be purified in the purification tank1, and dissolved matters are absorbed into the water to be purified whereas the exhaust gas is purified.

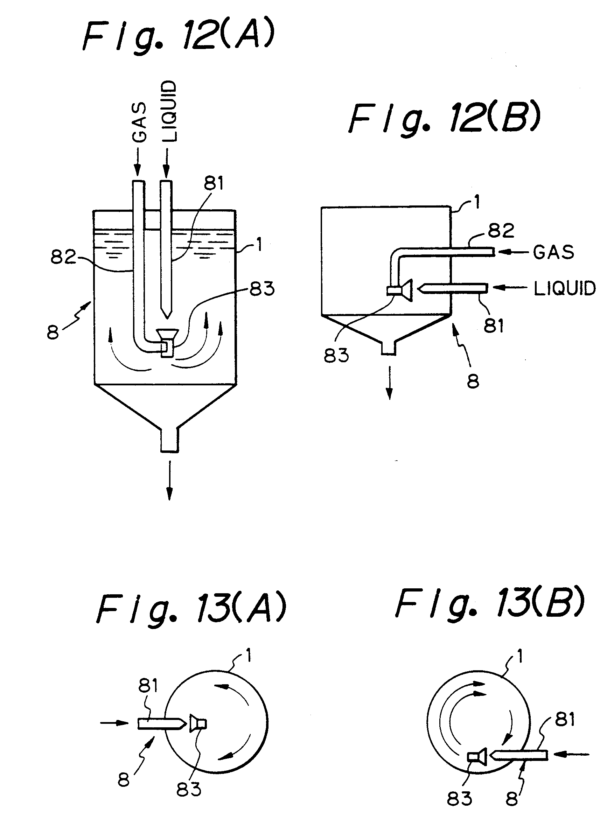

As shown in Figs. 10 and 11, the edge of the gas transport pipe 82 is streamlined not to give resistance to the liquid flow.

The injector 8 is arranged in either direction of vertical (A) or horizontal (B).

As shown in Fig. 13, the gas-liquid mixture flow may be directed either along the side wall 13 of the purification tank 1 after colliding with it (A), or without a collision (B).

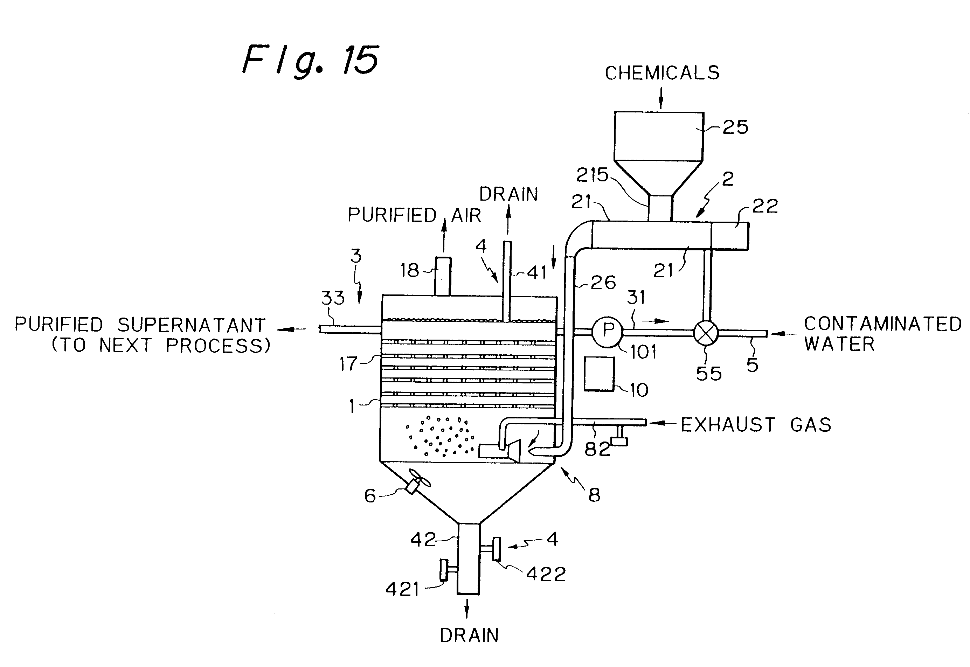

Fig. 15 shows an embodiment of the apparatus that purifies either one of contaminated water or exhaust gas, or both.

The hopper 25 is divided into an adequate number of compartments into which a single or mixed coagulants consisting of various chemicals are put. The switch on the control panel 10 is turned on to start the pump 101 which sends contaminated water from the purification tank 1 to the mixer 2 via the connecting pipe 31 with some pressure.

Liquid to be purified is sent forward by the rotating screw 23 connected to the motor 22, and the volume of the liquid going through the mixer 2 is calculated by the flow meter 24 installed in the mixer 2. A certain amount of each coagulant necessary for a ton of liquid to be purified is fed into the mixer 2 via the supply pipe 215 according to the instruction from the control panel 10.

When the liquid to be purified and the coagulant are mixed, the mixture flows down with pressure via the induction pipe 26 and injected into the purification tank 1 with a high pressure by the injector 8 installed within the tank.

On the other hand, the exhaust gas is sucked at a high speed from the pipe 82 and mixed with liquid to be purified and becomes a number of bubbles with ultra fine particles, from which it is injected from the injector 8 and rotates within the purification tank 1, wherein it contacts and is mixed with the liquid to be purified.

CO 1-3, SO 1-3 and NO 1-5 included in the bubbles are absorbed and dissolved in the liquid to be purified successively. SO 1-3 dissolves and changes to dilute sulfuric acid, and NO 1-5 dissolves and changes to dilute nitric acid.

These acids are progressively neutralized in the mixture of various purifying chemicals, dissolved, and purified. Simultaneously, going up in the liquid to be purified, the gas collides with the punching metals 17 installed in the purification tank 1 with an adequate number and collides with other matters, whereby it rotates and dissolves to repeatedly purify the liquid. Finally, the gas is released in the atmosphere without any contaminants from the exhaust pipe 18.

The drain that neutralized various acids deposits on the bottom of the purification tank 1 is taken out by opening the valves 421 and 422.

When both exhaust gas and contaminated water or latter alone is to be purified, the contaminated water is fed from the pipe 5 via the valve 55 in to the mixer 2 in which said purification process takes place, thereafter the supernatant liquid is sent to the next process of the purification apparatus from the pipe 33. Floating matters generated in the purification process are removed by sucking from the sucking pipe 41 above the tank, while the deposits are removed from the bottom of the purification tank 1.

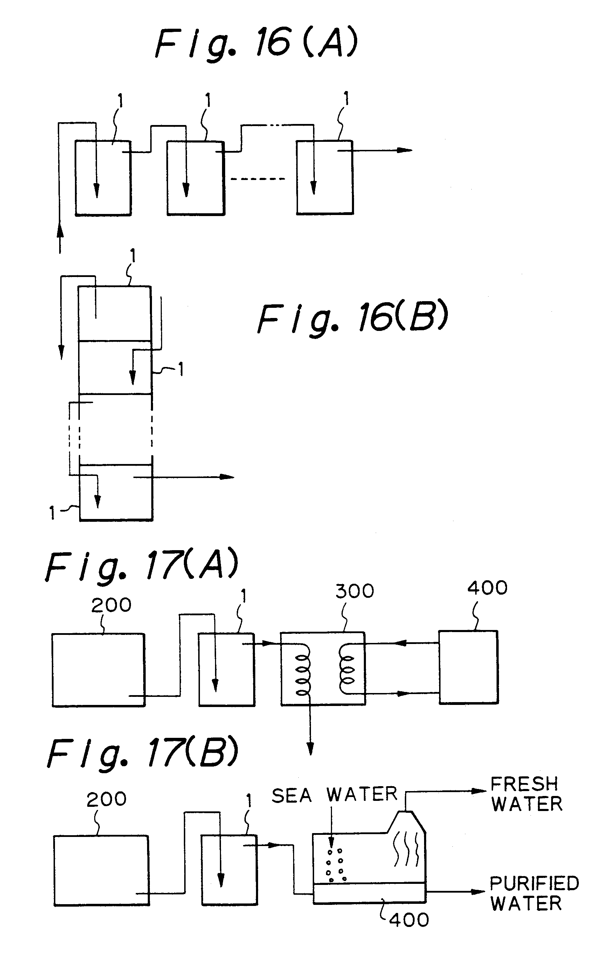

The purification apparatus may use a single purification tank, or as shown in Fig. 16, it may use more than one purification tank 1 connected in series horizontally (A) or vertically (B) if necessary.

As shown in Fig. 17, depending on the source of contaminated water 200 (e.g. turbine cooling water in thermoelectric power plants, drain water from air-conditioning, etc.) may be of high temperature. The temperature of such contaminated water is considerably high even after it has been purified in the purification tank 1. Therefore, the exhaust heat of such high temperature purified water can be sent to the heat exchanger 300, etc. to utilize its heat for some facilities 400. In Fig. 17, such facilities may be a heated swimming pool (A) or a desalination plant (B).

### Possible Applications in the Industry

This invention can be applied to purify not only contaminated water and exhaust gas, but also water from swimming pools, bathes, hot springs and various types of entertainment facilities, or air from factories, theaters, gathering places, exhibition places and the like.

In addition to these applications, a partial list of embodiments is as follows.
(1) A purification method and apparatus that produces harmless water and air by purifying and reusing at a low cost contaminated water on the earth and in space, or a large amount of water used and disposed for the purpose of preventing environmental contamination
(2) Purification of domestic waste water, miscellaneous sewage, industrial waste liquid, factory waste liquid, and cooling water from nuclear power plants, thermoelectric power plants, boilers, air-conditioners and so on.
(3) Various kinds of waste liquid, garbage liquid waste, incinerator liquid waste, dyes, detergent, kitchen water, slaughterhouse wastes, meat and fish processing wastes.
(4) Purification of algae bloom, red tides, seaweeds and muddy water.
(5) Sterilization of domestic animals, animal wastes, bacteria, colon bacilli, cholera germs, and Salmonellae.
(6) production of phosphorus, nitrogen, carbon dioxide, cyanogen, drugs, heavy metals, agricultural chemicals and sterilizing chemicals.
(7) Purification of rivers, lakes and swamps, ponds, seas and sludge.
(8) Purification of drinking water, semi-drinking water and sewage.
(9) Purification of highly-contaminated water at construction sites (dams, tunnels, rivers, reclamation, under tunnels, building, bridges, dredging, marine developments, tunnel constructions, and deep underground constructions).
(10) Prevention of environmental contamination and securing of emergency drinking water in case of draughts or disasters.
(11) Production and re-utilization of super pure water that can be used after the process of purification by the last membrane only to clean IC and electronics parts.
(12) Purification, desalination and conversion of cooling and heating water for nuclear power plants, thermoelectric power plants, boilers, combustion engines and heat engines, hot water, or seawater pumped up in a large amount or for cooling, into drinking water, semi-drinking water or industrial water
(13) Afforestation of deserts by purifying and desalinating seawater which is sent to large lakes made in the desert and a canal connected it.

## Claims

1. A purification apparatus comprising: a mixer (2) for mixing purifying chemicals and sewage, said mixer (2) comprising a hopper (25), a screw shaft (23) in a body (21), and a conducting pipe (26) connected to an exit of said body and extending downward from the exit; a purification tank (1) for receiving a mixture from said mixer (2) and for separating said mixture into floating matters and sediments of inorganic and organic materials, and purified liquid; a purified liquid piping system (3) for taking out supernatant in said purified liquid; and a drain piping system (4) for taking out said floating matters and said sediments, characterised in that said hopper (25) comprises partitioned compartments (252) and in that said mixer (2) further comprises a flow meter (24) mounted on an exit of said body (21) and an injector (9) for mixing gas and liquid so as to inject said mixed matter, attached to said mixer (2) at a position adjacent the downstream portion thereof, and in that said injector (9) is disposed at a lower portion of said purification tank (1).

2. A purification apparatus according to claim 1, characterised in that a window mechanism (11) is provided at a predetermined position on an outer side wall (13) of said purification tank (1) for allowing said supernatant in said purified liquid to sequentially overflow out of said purification tank (1); a trough (12) provided at the lower periphery of said purification tank for receiving said supernatant overflown from said purification tank; said purified liquid piping system (3) is arranged and disposed to take out said supernant from said trough.

3. The purification apparatus according to claim 1 or claim 2, wherein said purification tank (1) is provided at the bottom thereof with an injector (8) for mixing gas and liquid and for injecting said mixed matter at high-pressure and high-velocity.

4. The purification apparatus according to any preceding claim, wherein said gas to be supplied to at least one of said injectors (8 and 9) is exhaust gas.

5. The purification apparatus according to claim 2, wherein said window mechanism (11) is formed by cutting a window (131) of a rectangular shape into the side wall of said purification tank, and by covering said window with a rectangular door (132) which is displaceable in the vertical direction.

6. The purification apparatus according to claim 2, wherein said window mechanism (11) is formed by cutting a window (131) of a triangular shape into the side wall of said purification tank, and by covering said window with a rectangular door (132) which is displaceable in the horizontal direction.

7. The purification apparatus according to any of claims 1 to 4, wherein said purification apparatus is designed so as to supply application installations such as a heat exchanger with purified water of a high temperature which is obtained by purifying sewage of a high temperature.

## Patentansprüche

1. Eine Reinigungsvorrichtung, umfassend:
ein Mischwerk (2) zum Vermischen von reinigenden Chemikalien und Abwasser, das Mischwerk (2) umfassend ein Silo (25), eine in einem Körper (21) befindliche Schraubenwelle (23), und ein mit dem Ausgang des Körpers verbundenes und sich von dem Ausgang nach unten erstreckendes Leitungsrohr (26); einen Reinigungstank (1) zum Aufnehmen einer Mischung von dem Mischwerk (2) und zum Separieren der Mischung in Schwimmstoffe und Sedimente aus anorganischen und organischen Stoffen und gereinigte Flüssigkeit; ein Rohrleitungssystem (3) für gereinigte Flüssigkeit zum Entfernen von Überstand in der gereinigten Flüssigkeit; und ein Abflußrohrleitungssystem (4) zum Entfernen der Schwimmstoffe und der Sedimente,
**dadurch gekennzeichnet, daß**
das Silo (25) untergliederte Fächer (252) umfaßt, und daß das Mischwerk (2) des weiteren einen auf einem Ausgang des Körpers (21) befestigten Durchflußmesser (24) und einen an dem Mischwerk (2) befestigten Injektor (9) zum Vermischen von Gas und Flüssigkeit, um die vermischten Stoffe an einer Position in der Nähe des stromabwärts befindlichen Abschnitts davon einzuspritzen, umfaßt, und daß der Injektor (9) an einem unteren Abschnitt des Reinigungstanks (1) angeordnet ist.

2. Reinigungsvorrichtung nach Anspruch 1,
**dadurch gekennzeichnet, daß**
ein Fenstermechanismus (11) an einer vorbestimmten Position auf einer Außenseitenwand (13) des Reinigungstanks (1) vorgesehen ist, um dem in der gereinigten Flüssigkeit enthaltenen Überstand ein fortlaufendes Überlaufen aus dem Reinigungstank (1) zu gestatten; eine Wanne (12) an der unteren Peripherie vorgesehen ist, um den von dem Reinigungstank (1) übergelaufenen Überstand aufzunehmen; das Rohrleitungssystem (3) für gereinigte Flüssigkeit angeordnet und eingerichtet ist, um den Überstand aus der Wanne (12) zu entfernen.

3. Reinigungsvorrichtung nach Anspruch 1 oder 2, worin der Reinigungstank (1) an dem Boden der Reinigungsvorrichtung mit einem Injektor (8) zum Vermischen von Gas und Flüssigkeit und zum Einspritzen der vermischten Stoffe bei hohem Druck und hoher Geschwindigkeit versehen ist.

4. Reinigungsvorrichtung nach einem beliebigen der vorangegangenen Ansprüche, worin das mindestens einem der Injektoren (8, 9) zuzuführende Gas Abgas ist.

5. Reinigungsvorrichtung nach Anspruch 2, worin der Fenstermechanismus (11) durch Schneiden eines rechteckigen Fensters (131) in die Seitenwand des Reinigungstanks (1) geformt ist und durch Abdecken des Fensters mit einer rechteckigen Tür (132), die in vertikaler Richtung verstellbar ist.

6. Reinigungsvorrichtung nach Anspruch 2, worin der Fenstermechanismus (11) durch Schneiden eines dreieckigen Fensters (131) in die Seitenwand des Reinigungstanks (1) geformt ist und durch Abdecken des Fensters mit einer rechteckigen Tür (132), die in horizontaler Richtung verstellbar ist.

7. Reinigungsvorrichtung nach einem beliebigen der vorangegangenen Ansprüche, wobei die Reinigungsvorrichtung dazu ausgelegt ist Anwendungseinrichtungen, wie etwa einen Wärmetauscher, mit gereinigtem Wasser hoher Temperatur, das durch Reinigen von Abwasser von hoher Temperatur erzielt wird, zu versorgen.

## Revendications

1. Appareil de purification comprenant : un mélangeur (2) permettant de mélanger des produits chimiques purifiants et des eaux usées, ledit mélangeur (2) comprenant une trémie (25), un arbre à vis sans fin (23) placé dans un carter (21), et un tuyau de guidage (26) relié à une sortie dudit carter en s'étendant vers le bas à partir de cette sortie; un réservoir de purification (1) destiné à recevoir un mélange du mélangeur (2) et destiné à séparer ledit mélange en matières flottantes et en sédiments de matériaux organiques et inorganiques, et en liquide purifié ; un système de tuyauterie (3) pour le liquide purifié destiné à retirer le surnageant du liquide purifié ; et un système de tuyauterie (4) de drainage destiné à retirer les matières flottantes et les sédiments, caractérisé en ce que la trémie (25) comprend des compartiments cloisonnés (252) et en ce que ledit mélangeur (2) comprend en outre un débitmètre (24) monté à une sortie dudit carter (21) et un injecteur (9) destiné à mélanger du gaz et du liquide de façon à injecter ladite matière mélangée, et qui est fixé au dit mélangeur (2) en un emplacement voisin de la partie aval de ce mélangeur, et en ce que ledit injecteur (9) est placé au niveau d'une partie inférieure du réservoir de purification (1).

2. Appareil de purification selon la revendication 1, caractérisé en ce qu'un mécanisme à fenêtre (11) est prévu en un emplacement prédéterminé sur la paroi (13) latérale extérieure du réservoir de purification (1) de manière à permettre au surnageant du liquide purifié de déborder séquentiellement à l'extérieur du réservoir de purification (1); une auge (12) placée à la périphérie inférieure du réservoir de purification de manière à recevoir le surnageant débordant du réservoir de purification; et ledit système de tuyauterie (3) pour le liquide purifié est conformé et placé de manière à retirer le surnageant de ladite auge.

3. Appareil de purification selon la revendication 1 ou 2, dans lequel le réservoir de purification (1) est muni en partie inférieure d'un injecteur (8) destiné à mélanger du gaz et du liquide et à injecter ladite matière mélangée sous haute pression et à grande vitesse.

4. Appareil de purification selon l'une quelconque des revendications précédentes, dans lequel ledit gaz qui doit être alimenté à l'un au moins desdits injecteurs (8 et 9) est un gaz d'échappement.

5. Appareil de purification selon la revendication 2, dans lequel ledit mécanisme (11) à fenêtre est réalisé en découpant une fenêtre (131) de forme rectangulaire dans la paroi latérale du réservoir de purification, et en recouvrant ladite fenêtre par une porte (132) rectangulaire qui est déplaçable en direction verticale.

6. Appareil de purification selon la revendication 2, dans lequel ledit mécanisme (11) à fenêtre est formé en découpant une fenêtre (131) de forme triangulaire dans la paroi latérale du réservoir de purification, et en recouvrant ladite fenêtre d'une porte (132) rectangulaire qui est déplaçable en direction horizontale.

7. Appareil de purification selon l'une quelconque des revendications 1 à 4, dans lequel ledit appareil de purification est conçu de manière à alimenter des installations d'application tel qu'un échangeur de chaleur à eau purifiée de température élevée qui est obtenue par purification d'eaux usées de température élevée.
